# EUROPEAN PATENT APPLICATION

(11) **EP 4 376 183 A1**
(43) Date of publication of application: **29.05.2024**
(21) Application number: 23163906.3
(22) Date of filing: 24.03.2023
(51) Int. Cl.: H01M 50/204, H01M 50/271, H01M 50/298, H02G 3/00

(54) **BATTERY BOX BODY AND BATTERY PACK**

(30) Priority: 23.11.2022 CN 202211478330
(71) Applicant: CALB Group Co., Ltd., Changzhou City, Jiangsu Province (CN)
(72) Inventor: ZHANG, Keze, Changzhou City (CN); WANG, Zhenyi, Changzhou City (CN); LI, Wei, Changzhou City (CN)
(74) Representative: Becker, Eberhard

(57) **Abstract**

Disclosed are a battery box body and a battery pack. The battery box body includes a lower box body (10) and a cover plate (20). The cover plate (20) is connected to the lower box body (10). One end of the cover plate (20) is bent to form a folded edge (21). A receiving groove (22) for accommodating a low-voltage wire harness (41) is formed between the folded edge (21) and the lower box body (10) to allow the low-voltage wire harness (41) to pass through. In this manner, the folded edge (21) provides position-limiting protection for the low-voltage wire harness (41), thereby serving as a support structure for the low-voltage wire harness (41) to provide protection for the low-voltage wire harness (41), and making it convenient to arrange routing of the low-voltage wire harness (41).

## Description

### BACKGROUND

### Technical Field

The disclosure relates to the technical field of batteries, in particular to a battery box body and a battery pack.

### Description of Related Art

In the related art, a battery box body is configured to accommodate a battery assembly formed by a plurality of batteries to protect the batteries. There are a variety of wire harness assemblies connected to the battery assembly to satisfy different connection requirements. However, the structural limitations of the battery box body itself cause inconvenience in routing the wire harness assemblies.

### SUMMARY

The disclosure provides a battery box body and a battery pack to improve the performance of the battery box body.

In a first aspect of the present disclosure, a battery box body includes: a lower box body; a cover plate, which is connected to the lower box body, one end of the cover plate is bent to form a folded edge, and a receiving groove for accommodating a low-voltage wire harness is formed between the folded edge and the lower box body.

The battery box body in an embodiment of the present disclosure includes a lower box body and a cover plate. The cover plate is connected to the lower box body. One end of the cover plate is bent to form a folded edge. A receiving groove for accommodating a low-voltage wire harness is formed between the folded edge and the lower box body so that the folded edge allows the low-voltage wire harness to pass through. In this manner, the folded edge provides position-limiting protection for the low-voltage wire harness, thereby serving as a support structure for the low-voltage wire harness to provide protection for the low-voltage wire harness, and making it convenient to arrange routing of the low-voltage wire harness. That is, it may be ensured that the low-voltage wire harness may be routed in a relatively fixed position, thus improving the routing efficiency of the battery box body, and enhancing the performance of the battery box body.

In a second aspect of the present disclosure, a battery pack is provided and includes the above-mentioned battery box body.

The battery box body of the battery pack in an embodiment of the present disclosure includes a lower box body and a cover plate. The cover plate is connected to the lower box body. One end of the cover plate is bent to form a folded edge. A receiving groove for accommodating a low-voltage wire harness is formed between the folded edge and the lower box body so that the folded edge allows the low-voltage wire harness to pass through. In this manner, the folded edge provides position-limiting protection for the low-voltage wire harness, thereby serving as a support structure for the low-voltage wire harness to provide protection for the low-voltage wire harness, and making it convenient to arrange routing of the low-voltage wire harness. That is, it may be ensured that the low-voltage wire harness may be routed in a relatively fixed position, thereby improving the routing efficiency of the battery box body, and enhancing the performance of the battery box body.

### BRIEF DESCRIPTION OF THE DRAWINGS

To facilitate understanding of the present disclosure, reference is made to the embodiments illustrated in the following figures. Parts in the drawings are not necessarily to scale, and related elements may be omitted in order to emphasize and clearly illustrate the technical features of the present disclosure. In addition, related elements or components may be arranged differently as known in the art. Moreover, in the drawings, the same reference numerals denote the same or similar components in the respective drawings.
FIG. 1 is a structural schematic view of a battery pack from a viewing angle according to an exemplary embodiment.
FIG. 2 is a structural schematic view of a battery pack from another viewing angle according to an exemplary embodiment.
FIG. 3 is a schematic exploded view of a battery pack according to an exemplary embodiment.
FIG. 4 is a schematic exploded view of a partial structure of a battery pack according to an exemplary embodiment.
FIG. 5 is a schematic view of a partial structure of a cover plate of a battery pack from a viewing angle according to an exemplary embodiment.
FIG. 6 is a schematic view of a partial structure of a cover plate of a battery pack from another viewing angle according to an exemplary embodiment.

### DESCRIPTION OF THE EMBODIMENTS

The technical solutions in the exemplary embodiments of the present disclosure will be clearly and thoroughly described below with reference to the accompanying drawings in the exemplary embodiments of the present disclosure. The exemplary embodiments described herein are for illustrative purposes only and are not intended to limit the scope of the present disclosure, so it should be understood that various modifications and changes may be made to the exemplary embodiments without departing from the scope of the present disclosure.

In the description of the present disclosure, unless otherwise explicitly specified and limited, the terms "first" and "second" are only used for the purpose of description, and should not be construed as indicating or implying relative importance. The term "plurality" means two or more; the term "and/or" includes any and all combinations of one or more of associated items that are listed here. In particular, reference to "the/said" or "an" object is also intended to mean one of the possible plurality of such objects.

Unless otherwise specified or stated, the terms "connected", "fixed", etc. should be understood in a broad sense, for example, "connected" may be a fixed connection, a detachable connection, an integral connection, or an electrical connection, or a signal connection. "Connection" can be direct connection or indirect connection established through an intermediary. For those skilled in the art, the specific meanings of the above terms in the present disclosure should be understood according to specific situations.

Further, in the description of the present disclosure, it should be understood that the directional terms "upper", "lower", "inner", "outer" and the like described in the exemplary embodiments of the present disclosure are given from the angles shown in the drawings, and should not be construed as limiting the exemplary embodiments of the present disclosure. It should also be understood that, in this context, when an element or feature is referred to as being connected "on", "under", or "inside" or "outside" another element(s), not only can it be directly connected "on", "under" or "inside", "outside" another element(s), but also be indirectly connected "on", "under", or "inside", "outside" another element(s) through intervening elements.

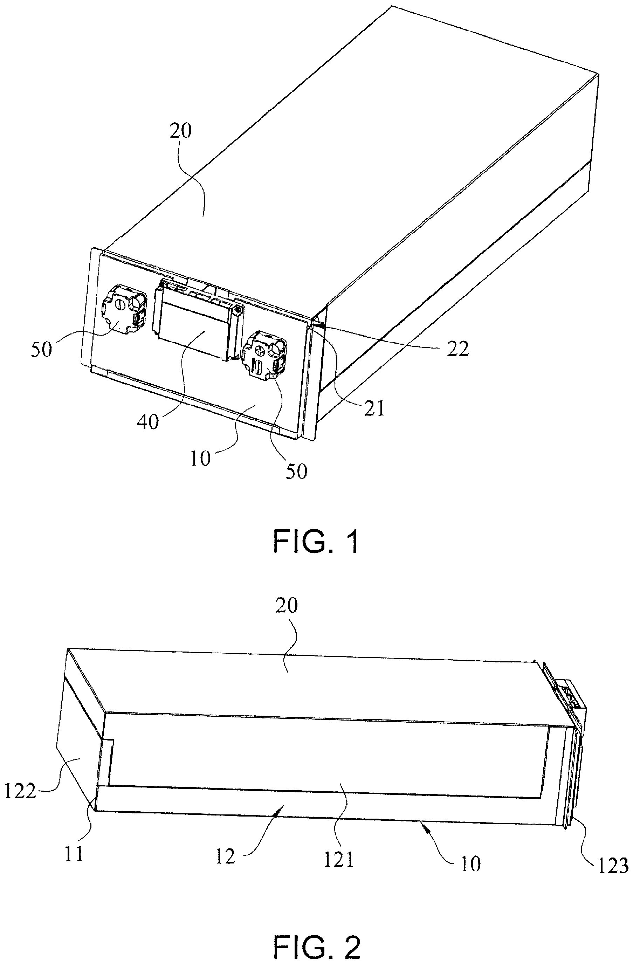

An embodiment of the present disclosure provides a battery box body, please refer to FIG. 1 to FIG. 6. The battery box body includes: a lower box body 10; a cover plate 20, the cover plate 20 is connected to the lower box body 10, one end of the cover plate 20 is bent to form a folded edge 21 for a low-voltage wire harness to pass through, and a receiving groove 22 for accommodating the low-voltage wire harness is formed between the folded edge 21 and the lower box body 10.

The battery box body in an embodiment of the present disclosure includes a lower box body 10 and a cover plate 20. The cover plate 20 is connected to the lower box body 10. One end of the cover plate 20 is bent to form a folded edge 21. A receiving groove 22 for accommodating a low-voltage wire harness is formed between the folded edge 21 and the lower box body 10 so that the folded edge 21 allows the low-voltage wire harness to pass through. In this manner, the folded edge 21 provides position-limiting protection for the low-voltage wire harness, thereby serving as a support structure for the low-voltage wire harness to provide protection for the low-voltage wire harness, and making it convenient to arrange routing of the low-voltage wire harness. That is, it may be ensured that the low-voltage wire harness may be routed in a relatively fixed position, thereby improving the routing efficiency of the battery box body, and enhancing the performance of the battery box body.

It should be noted that the low-voltage wire harness may be configured to connect the battery and a BMS battery management module. The BMS battery management module may be located outside the battery box body. Therefore, a part of the low-voltage wire harness may be drawn out from the inside of the battery box body to facilitate connection with the BMS battery management module. In this embodiment, the folded edge 21 is formed by bending one end of the cover plate 20, so that the low-voltage wire harness drawn from the inside of the battery box body is able to pass through the folded edge 21 to form a connection with the BMS battery management module. Not only that it is possible for the low-voltage wire harness to be routed according to a predetermined path, and the low-voltage wire harness located outside the battery box body may be conveniently connected to the BMS battery management module, thereby improving the assembling efficiency of the battery pack.

As shown in FIG. 1, a receiving groove 22 for accommodating the low-voltage wire harness is formed between the folded edge 21 and the lower box body 10. The receiving groove 22 not only can serve as wiring storage for the low-voltage wire harness, but also limit the position of the low-voltage wire harness, so as to ensure that the low-voltage wire harness passes through the receiving groove 22 in a reliable manner, and prevent problems such as position deviation of the low-voltage wire harness, thereby ensuring that the low-voltage wire harness is reliably connected to the BMS battery management module.

It should be noted that the receiving groove 22 is formed outside the battery box body, that is, the opening of the receiving groove 22 may communicate with the external environment.

In an embodiment, the receiving groove 22 is located inside the lower box body 10, that is, the folded edge 21 is located inside the lower box body 10, which not only facilitates the connection between the cover plate 20 and the lower box body 10, but also prevents the folded edge 21 from occupying too much space of the battery box body. In this manner, the structure of the battery box body may be optimized to the greatest extent, and it is also convenient to arrange the routing of the low-voltage wire harness.

The receiving groove 22 is located inside the lower box body 10, that is, the receiving groove 22 may be formed between the folded edge 21 and the inner side wall of the lower box body 10.

It should be noted that, in some embodiments, it is not excluded that the receiving groove 22 is located outside the lower box body 10, that is, the receiving groove 22 may be formed between the folded edge 21 and the outer side wall of the lower box body 10.

In an embodiment, the folded edge 21 may be bent downward relative to one end of the cover plate 20, for example, the folded edge 21 may be a flat plate, and the flat plate is bent downward relative to one end of the cover plate 20 and is opposite to a portion of the lower box body 10, thereby forming a substantially U-shaped receiving groove 22, so as to limit the position of the low-voltage wire harness for protection.

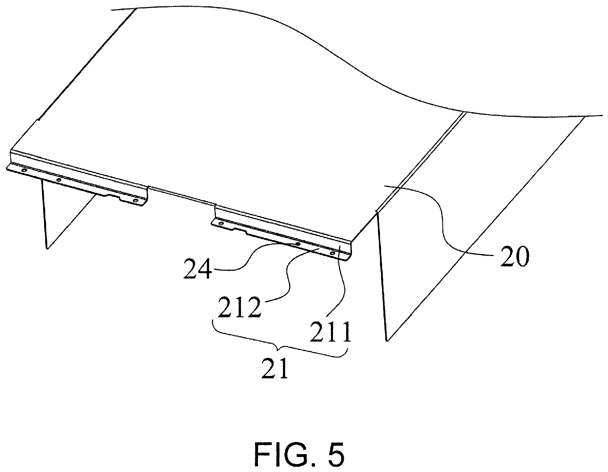

In an embodiment, as shown in FIG. 5, the folded edge 21 includes a first segment 211 and a second segment 212. The first segment 211 is bent downward from one end of the cover plate 20, and the second segment 212 is connected to one end of the first segment 211 away from the cover plate 20, and is extended toward the inner side wall of the lower box body 10 to form the receiving groove 22 with the lower box body 10. In this manner, not only that it is possible to make full use of the space of the lower box body 10, prevent the folded edge 21 from increasing the size of the battery box body, but also the receiving groove 22 formed between the folded edge 21 and the lower box body 10 serves to limit the position of the low-voltage wire harness for protection.

The folded edge 21 may be substantially L-shaped, that is, the first segment 211 and the second segment 212 are substantially L-shaped. The first segment 211 is bent downward from one end of the cover plate 20, and the second segment 212 is connected to one end of the first segment 211 away from the cover plate 20, and is extended toward the lower box body 10 so that one end of the second segment 212 may be arranged opposite to a portion of the lower box body 10, thereby forming a substantially U-shaped receiving groove 22, and the low-voltage wire harness is located in the U-shaped receiving groove 22, so as to ensure the routing stability of the low-voltage wire harness.

In an embodiment, at least part of the cover plate 20 is substantially parallel to the second segment 212, so that the volume of the receiving groove 22 is relatively large, and it is possible for the routing of the low-voltage wire harness in the receiving groove 22 to be relatively stable. In this way, the problem of long low-voltage wire harness may be avoided to some extent.

In an embodiment, at least a part of the cover plate 20 is substantially perpendicular to the first segment 211, that is, the first segment 211 and the second segment 212 are substantially perpendicular, and the first segment 211 and the second segment 212 substantially form an L-shaped structure for the low-voltage wire harness to pass through, and may serve to protect the low-voltage wire harness while being able to isolate the low-voltage wire harness from other wire harness, for example, to isolate the low-voltage wire harness from high-voltage wire harness, thereby avoiding the interference of the high-voltage signal on the low-voltage signal.

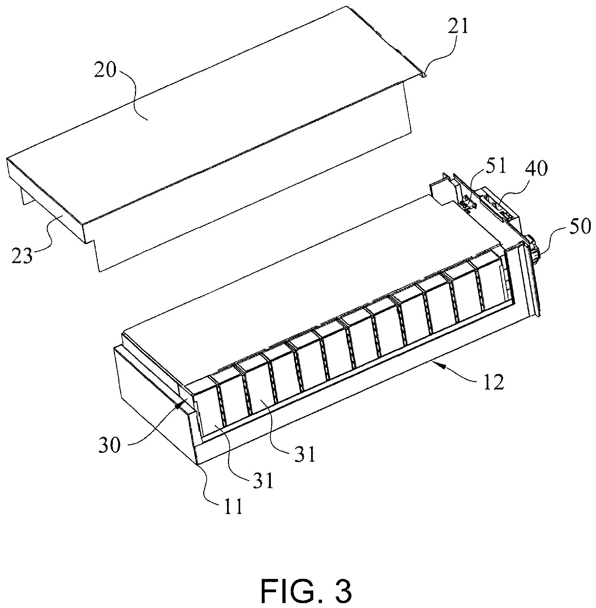

In an embodiment, as shown in FIG. 2 and FIG. 3, the lower box body 10 includes a base plate 11 and a main frame 12. The main frame 12 is connected to the base plate 11, and the main frame 12 includes a first end plate 122 and a second end plate 123. The first end plate 122 and the second end plate 123 are oppositely connected to the base plate 11, and the cover plate 20 is bent towards one end of the second end plate 123 to form a folded edge 21, so that the receiving groove 22 is formed between the folded edge 21 and the second end plate 123 in order to accommodate the low-voltage wire harness and serve as a reliable protection for the low-voltage wire harness. In this configuration, the BMS battery management module may be arranged on the second end plate 123.

As shown in FIG. 2, the first end plate 122 and the second end plate 123 are oppositely arranged on the base plate 11, and the main frame 12 may further include two opposite side plates 121. The two opposite side plates 121 are conveniently connected to two opposite ends of the base plate 11, so that a receiving space is formed between the first end plate 122 and the second end plate 123. By connecting the cover plate 20 to the main frame 12, a chamber for accommodating the battery is formed as an effective protection for the battery.

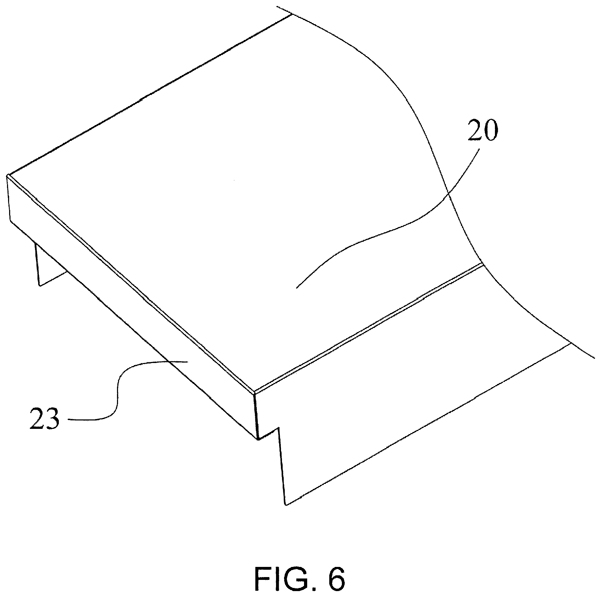

In an embodiment, the second end plate 123 is detachably connected to the main frame 12. In an embodiment, as shown in FIG. 3 and FIG. 6, the cover plate 20 is bent toward the other end of the first end plate 122 to form a butt flange 23, and the butt flange 23 is connected to the first end plate 122, so that the cover plate 20 is reliably fixed on the main frame 12 to ensure the connection stability of the cover plate 20.

The opposite sides of the cover plate 20 form a folded edge 21 and a butt flange 23 respectively. The butt flange 23 is connected to the first end plate 122, and a receiving groove 22 is formed between the folded edge 21 and the second end plate 123, so that the low-voltage wire harness is located between the folded edge 21 and the second end plate 123 to serve as reliable protection for the low-voltage wire harness.

In an embodiment, a receiving groove 22 is formed between the folded edge 21 and the second end plate 123, that is, the first segment 211 of the folded edge 21 is bent downward from one end of the cover plate 20, and the second segment 212 of the folded edge 21 is connected to one end of the first segment 211 away from the cover plate 20 and extends towards the inner side wall of the second end plate 123, thereby forming the receiving groove 22.

Considering that the structure of the cover plate 20 itself is relatively simple, it is easier for the cover plate 20 to form a folded edge 21, and it is also convenient to complete the connection between the cover plate 20 and the lower box body 10 subsequently. Moreover, when the battery pack is assembled, the cover plate 20 may be the last component to be assembled. Therefore, the folded edge 21 of the cover plate 20 will not affect the assembling of other components, thereby improving the assembling efficiency of the battery pack.

In an embodiment, the folded edge 21 is connected to the second end plate 123, so as to improve the connection stability between the cover plate 20 and the lower box body 10, and the second end plate 123 may provide reliable support for the folded edge 21, preventing the folded edge 21 from being deformed, thereby improving the structural stability of the folded edge 21.

The second segment 212 of the folded edge 21 may be placed on the top of the second end plate 123, so that the second end plate 123 forms a support for the folded edge 21. When the cover plate 20 is assembled, it is also possible for the second end plate 123 to reliably position the cover plate 20, thereby improving the assembling efficiency of the cover plate 20.

In an embodiment, the folded edge 21 is detachably connected to the second end plate 123, which not only facilitates the assembling of the folded edge 21 and the second end plate 123, but also facilitates the subsequent maintenance of the battery pack, thereby improving the service life of the battery pack.

In an embodiment, the folded edge 21 and the second end plate 123 may be connected by fasteners. For example, the folded edge 21 may be connected to the second end plate 123 by screws. In this way, not only that the connection method is simple, but also the assembling is easy and disassembly may be carried out conveniently in subsequent process.

The folded edge 21 and the second end plate 123 may be connected by multiple fasteners, which is not limited here.

Alternatively, the folded edge 21 is engaged with the second end plate 123, which not only facilitates the connection, but also facilitates the disassembly of the folded edge 21 and the second end plate 123. For example, the folded edge 21 and the second end plate 123 may be engaged with each other through convex and concaves, which is not limited here.

In an embodiment, the second end plate 123 may be integrally formed with the main frame 12. In the configuration, the folded edge 21 is disposed on the cover plate 20, the receiving groove 22 is formed through the folded edge 21 and the second end plate 123, and the second end plate 123 may provide a supporting surface for the folded edge 21 and form a side wall of the receiving groove 22. In this way, the second end plate 123 will not interfere with other structures in the battery box body, thereby facilitating the assembling of the battery pack.

It should be noted that, in some embodiments, it is not excluded that the receiving groove 22 may be formed between the folded edge 21 and the main frame 12.

An embodiment of the present disclosure further provides a battery pack, which includes the above-mentioned battery box body.

The battery box body of the battery pack in an embodiment of the present disclosure includes a lower box body 10 and a cover plate 20. The cover plate 20 is connected to the lower box body 10. One end of the cover plate 20 is bent to form a folded edge 21. A receiving groove 22 for accommodating a low-voltage wire harness is formed between the folded edge 21 and the lower box body 10 so that the folded edge 21 allows the low-voltage wire harness to pass through. In this manner, the folded edge 21 provides position-limiting protection for the low-voltage wire harness, thereby serving as a support structure for the low-voltage wire harness to provide protection for the low-voltage wire harness, and making it convenient to arrange routing of the low-voltage wire harness. That is, it may be ensured that the low-voltage wire harness may be routed in a relatively fixed position, thereby improving the routing efficiency of the battery box body, and enhancing the performance of the battery box body.

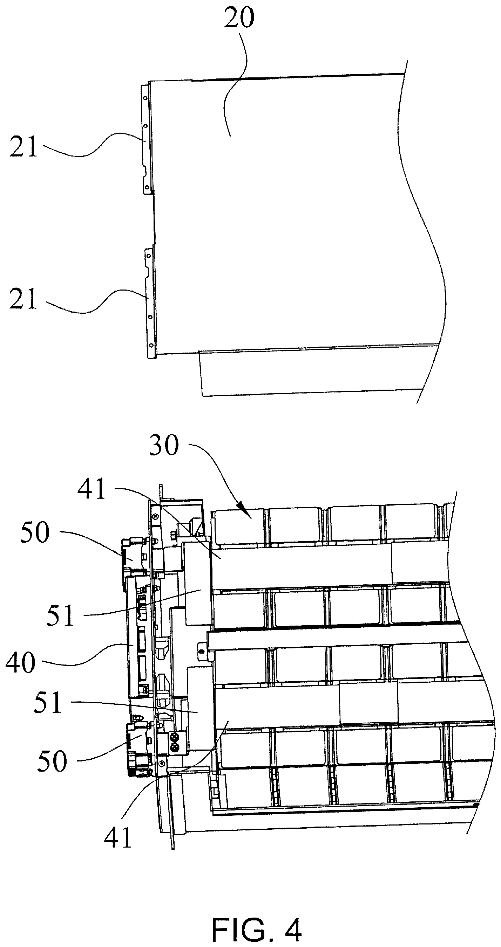

In an embodiment, as shown in FIG. 3 and FIG. 4, the battery pack further includes: a battery assembly 30, the battery assembly 30 is arranged in the lower box body 10, and the battery assembly 30 includes a plurality of single cells 31; a BMS battery management module 40, the BMS battery management module 40 is set on the lower box body 10; a low-voltage wire harness 41, the low-voltage wire harness 41 connects the battery assembly 30 and the BMS battery management module 40, and a part of the low-voltage wire harness 41 is set on the folded edge 21, so that a part of the low-voltage wire harness 41 may form an electrical connection with the BMS battery management module 40 through the folded edge 21. The BMS battery management module 40 is configured to obtain voltage information, temperature information, etc. of the battery assembly 30.

As shown in FIG. 4, the low-voltage wire harness 41 may include a circuit board, and the circuit board may be arranged above the battery assembly 30 to form a connection with a plurality of single cells 31, so as to obtain voltage information and temperature information of the single cells 31, etc. Moreover, the low-voltage wire harness 41 may also include a connecting wire harness, which may be connected to a connector of the circuit board. Furthermore, the connecting wire harness is electrically connected to the BMS battery management module 40 through the folded edge 21. The connecting wire harness may be a wire.

In an embodiment, as shown in FIG. 1, FIG. 3 and FIG. 5, the battery pack further includes: a high-voltage connector 50 disposed on the lower box body 10; a high-voltage wire harness 51 connecting the battery assembly 30 and the high-voltage connector 50, the high-voltage wire harness 51 is located below the folded edge 21, so that the folded edge 21 isolates the low-voltage wire harness from the high-voltage wire harness 51. That is to say, the folded edge 21 may form electromagnetic shielding, thereby avoiding interference of high-voltage signals to low-voltage signals.

The cover plate 20 is made of metal, that is, the folded edge 21 is made of metal, and the folded edge 21 isolates the low-voltage wire harness from the high-voltage wire harness 51, so that the interference of the high-voltage signal to the low-voltage signal may be avoided through electromagnetic shielding. In this way, it is possible to ensure the performance of the battery pack, and the problem of chaotic signal or weak signal may be avoided.

The high-voltage connector 50 may be used as the charging and discharging connection ends of the battery pack. There may be two high-voltage connectors 50, and the two high-voltage connectors 50 may be the positive terminal and the negative terminal. The BMS battery management module 40 may be substantially located between two high-voltage connectors 50, as shown in FIG. 1.

In an embodiment, as shown in FIG. 5, at least one of the cover plate 20 and the folded edge 21 is provided with a through hole 24 for the low-voltage wire harness to pass through and to be formed on the folded edge 21 for connection with the BMS battery management module 40. The low-voltage wire harness configured to pass through the through hole 24 may be a wire, so as to pass through the through hole 24 and enter the receiving groove 22 formed by the folded edge 21 and the lower box body 10.

In an embodiment, the engagement of the low-voltage wire harness and the folded edge 21 not only facilitates to fix the folded edge 21, but also ensures that the low-voltage wire harness is reliably fixed on the folded edge 21. The low-voltage wire harness and the folded edge 21 may be engaged through the buckle provided on the folded edge 21. The low-voltage wire harness is insulated from the folded edge 21, for example, the folded edge 21 may be coated with a coating, such as aluminum oxide (Al₂O₃), zirconia (ZrO₂) and other ceramic materials.

The low-voltage wire harness is engaged with the folded edge 21, and the receiving groove 22 may be formed between the folded edge 21 and the second end plate 123, and the low-voltage wire harness is located in the receiving groove 22. In this way, it is possible to provide reliable protection for the low-voltage wire harness and improve the safety and performance of the battery pack.

It should be noted that a plurality of single cells 31 may be fixed through end plates and side plates to form a battery module, and the battery module is placed into the battery box body. Alternatively, the plurality of single cells 31 may be directly arranged in the battery box body, that is, there is no need to assemble the plurality of single cells 31 into a group, in which case, the end plates and side plates may be removed.

The single cell 31 includes a core and an electrolyte, the minimum unit capable of performing an electrochemical reaction such as charging/discharging. The core refers to a unit formed by winding or laminating a stacked portion, and the stacked portion includes a first electrode, a separator, and a second electrode. When the first electrode is a positive electrode, the second electrode is a negative electrode. The polarities of the first electrode and the second electrode may be switched. The core is set in the battery housing.

The single cell 31 is a laminated battery, which is not only convenient for grouping, but also may be processed to obtain a longer battery. Specifically, the core is a laminated core, and the core has first electrode sheets stacked on one another, second electrode sheets electrically opposite to the first electrode sheets, and a diaphragm disposed between the first electrode sheet and the second electrode sheet, so that multiple pairs of the first electrode sheets and the second electrode sheets are stacked to form a laminated core.

Optionally, the single cell 31 may be a wound battery, that is, a first electrode sheet, a second electrode sheet electrically opposite to the first electrode sheet, and a diaphragm arranged between the first electrode sheet and the second electrode sheet are wound to obtain a wound core.

It should be noted that a plurality of folded edges 21 may be formed on the cover plate 20, and the plurality of folded edges 21 may respectively correspond to a plurality of battery assemblies 30. Each battery assembly 30 is able to isolate the high-voltage wire harness from the low-voltage wire harness through the corresponding folded edge 21. In this way, it is possible to avoid signal interference between high-voltage signals and low-voltage signals to ensure the performance of the battery pack.

Other embodiments of the present disclosure will readily occur to those skilled in the art from consideration of the specification and practice of the disclosure disclosed herein. This disclosure is intended to cover any modification, use or adaptation of the present disclosure, and these modifications, uses or adaptations follow the general principles of this disclosure and include common knowledge or conventional technical means in the technical field not disclosed in this disclosure.

## Claims

1. A battery box body, comprising:
a lower box body (10);
a cover plate (20), wherein the cover plate (20) is connected to the lower box body (10), one end of the cover plate (20) is bent to form a folded edge (21), a receiving groove (22) for accommodating a low-voltage wire harness (41) is formed between the folded edge (21) and the lower box body (10).

2. The battery box body according to claim 1, wherein the receiving groove (22) is located at an inner side of the lower box body (10).

3. The battery box body according to claim 2, wherein the folded edge (21) comprises a first segment (211) and a second segment (212), the first segment (211) is bent downward from one end of the cover plate (20), and the second segment (212) is connected to one end of the first segment (211) away from the cover plate (20), and is extended toward an inner side wall of the lower box body (10) to form the receiving groove (22) with the lower box body (10).

4. The battery box body according to claim 3, wherein at least a part of the cover plate (20) is substantially parallel to the second segment (212).

5. The battery box body according to claim 4, wherein at least a part of the cover plate (20) is substantially perpendicular to the first segment (211).

6. The battery box body according to any one of claims 1 to 5, wherein the lower box body (10) comprises a base plate (11) and a main frame (12), the main frame (12) is connected to the base plate (11), and the main frame (12) comprises a first end plate (122) and a second end plate (123), the first end plate (122) and the second end plate (123) are oppositely connected to the base plate (11), and the cover plate (20) is bent towards one end of the second end plate (123) to form the folded edge (21), the receiving groove (22) is formed between the folded edge (21) and the second end plate (123).

7. The battery box body according to claim 6, wherein the cover plate (20) is bent toward the other end of the first end plate (122) to form a butt flange (23), and the butt flange (23) is connected to the first end plate (122).

8. The battery box body according to claim 6, wherein the folded edge (21) is connected to the second end plate (123);
wherein the folded edge (21) is detachably connected to the second end plate (123).

9. The battery box body according to claim 8, wherein the folded edge (21) and the second end plate (123) are connected by a fastener, or the folded edge (21) is engaged with the second end plate (123).

10. A battery pack, comprising the battery box body according to any one of claims 1 to 9.

11. The battery pack according to claim 10, further comprising:
a battery assembly (30), which is disposed in the lower box body (10), and comprising a plurality of single cells (31);
a BMS battery management module (40), which is disposed on the lower box body (10);
a low-voltage wire harness (41), which connects the battery assembly (30) and the BMS battery management module (40), wherein a part of the low-voltage wire harness (41) is disposed on the folded edge (21).

12. The battery pack according to claim 11, further comprising:
a high-voltage connector (50), which is disposed on the lower box body (10);
a high-voltage wire harness (51), which connects the battery assembly (30) and the high-voltage connector (50), wherein a part of the high-voltage wire harness (51) is located below the folded edge (21), so that the folded edge (21) isolates the low-voltage wire harness (41) from the high-voltage wire harness (51).

13. The battery pack according to claim 11 or claim 12, wherein at least one of the cover plate (20) and the folded edge (21) is provided with a through hole (24) for the low-voltage wire harness (41) to pass through.

14. The battery pack according to claim 11 or claim 12, wherein the low-voltage wire harness (41) is engaged with the folded edge (21).
